Europäisches Patentamt

European Patent Office

Office européen des brevets

(19)

(11) Veröffentlichungsnummer: **0 236 989**
**B1**

(12) # EUROPÄISCHE PATENTSCHRIFT

(45) Veröffentlichungstag der Patentschrift:
28.11.90

(51) Int. Cl.⁵: **C02F 3/34, A23L 1/30,**
**A23K 1/00, B08B 9/00**

(21) Anmeldenummer: 87103263.7

(22) Anmeldetag: 06.03.87

(54) Verfahren zur Reinigung von Abflussrohren für fetthaltige

(30) Priorität: 13.03.86 DE 3608422

(43) Veröffentlichungstag der Anmeldung:
16.09.87 Patentblatt 87/38

(45) Bekanntmachung des Hinweises auf die Patenterteilung:
28.11.90 Patentblatt 90/48

(84) Benannte Vertragsstaaten:
AT BE CH DE ES FR GB GR IT LI LU NL SE

(73) Patentinhaber: BTC Biotechnik International GmbH,
Kirchwerder Hausdeich 56, D-2050 Hamburg 80(DE)

(72) Erfinder: Becker, Klaus, Gojensbergsweg 89,
D-2050 Hamburg 80(DE)

(74) Vertreter: Kuhnen, Wacker & Partner,
Schneggstrasse 3-5 Postfach 1553, D-8050 Freising(DE)

(56) Entgegenhaltungen:
EP-A- 0 027 694
EP-A- 0 033 584
EP-A- 0 226 758
EP-A- 0 245 560
DE-A- 1 096 295
LU-A- 65 465
US-A- 2 542 886
US-A- 3 244 527
US-A- 3 708 578
US-A- 3 949 090
US-A- 4 266 033
US-A- 4 299 854

PATENT ABSTRACTS OF JAPAN, Band 6, Nr. 85 (C103)
(963), 22. Mai 1982; & JP-A-57 18 982
CHEMICAL ABSTRACTS, Band 103, Nr. 21,

(56) Entgegenhaltungen: (Fortsetzung)
November 1985, Seite 956, Ref.Nr. 177338n; Columbus,
Ohio, Us; P.W. WALDROUP et al.: "The effects of
increased levels of niacin suplementation on growth
rate and carcass composition of broiler chickens"
CHEMICAL ABSTRACTS, Band 98, Nr. 19, Mai 1983,
Seite 386, Ref.Nr. 159130n; Columbus, Ohio, US; &
JP-A-58 16 679
CHEMICAL ABSTRACTS, Band 95, Nr. 5, August 1981,
Seite 577, Ref.Nr.40815n; Columbus, Ohio, US; E.D.
MIKHLIN et al.: "Activation of lactic acic bacteria"

## Beschreibung

Die Erfindung betrifft ein Verfahren zur Reinigung von Abflußrohren für fetthaltige Abwässer aus dem Haushalt oder gewerblichen Unternehmen.

In Abflußrohren von Haushaltungen und gewerblichen Betrieben bildet Fett zusammen mit Haaren und anderen Abfallstoffen häufig Pfropfen. Durch Herauslösen des Fettes lassen sich diese Pfropfen zerstören. Im Stand der Technik geschieht dies durch Verseifung des Fettes, z.B. mit Kali- oder Natronlauge, oder durch Emulgieren des Fettes durch Detergenzien. Die Verseifung kann auch mit einer Emulgierung gekoppelt werden. Diese bekannte Art der Rohrreinigung hat jedoch beträchtliche Nachteile. Bei der Verseifung mit Kali- oder Natronlauge werden laugenempfindliche Materialien angegriffen, was zu einer Zerstörung der Abflußleitungen führen kann, wenn diese nicht vollständig laugenfest sind. Der große Laugenüberschuß zerstört die Mikroflora im Vorfluter bzw. Klärwerk, was zu beträchtlichen Störungen führen kann. Solche Produkte rufen bei Hautkontakt Reizungen hervor, sind also für den Anwender gesundheitsschädlich.

Auch die Emulgierung allein durch Detergenzien belastet den Vorfluter und das Klärwerk.

Der Erfindung liegt daher die Aufgabe zugrunde, die Bildung eines fettenthaltenden Pfropfens in Abflußrohren zu verhindern, bzw., wenn sich ein solcher Pfropfen bereits gebildet hat, ihn aufzulösen, ohne ätzende, gesundheitsschädliche und stark umweltbelastende Nebenwirkungen zu haben.

Diese Aufgabe wird bei einem Verfahren der eingangs genannten Gattung dadurch gelöst, daß man den im Abwasser enthaltenen fettabbauenden und/oder fettemulgierenden Bakterien Suppline zusetzt.

Mikroorganismen haben sich häufig so spezialisiert, daß sie zum Leben Suppline benötigen. Suppline sind Stoffe, die zum Grundbestand der Zelle gehören und von einzelnen Organismen nicht selbst synthetisiert werden können. Es handelt sich dabei um Aminosäuren, Purine, Pyrimidine, organische Säuren, Kohlenhydrate sowie Vitamine. Von ihrer Funktion und Konzentration her unterscheiden sich Suppline deutlich von Nährstoffen. Sie entsprechen den Vitaminen bei der tierischen und menschlichen Ernährung.

Als Nährstoffe, die sich grundsätzlich von Supplinen unterscheiden, sind die folgenden Verbindungen bekannt: Ammoniumionen, Nitrationen, Phosphationen, Glucose, Polysaccharide, Proteine und Kohlenhydrate.

Zur Reinigung von Abflußrohren für fetthaltige Abwässer aus dem Haushalt oder gewerblichen Unternehmen wird durch die Zugabe von Supplinen für fettabbauende bzw. fettemulgierende Bakterien die Bildung eines Pfropfens im Aflußrohr verhindert bzw., wenn sich ein solcher Pfropfen bereits gebildet hat, seine Auflösung leicht bewirkt.

Erfindungsgemäß wird daher eine biologische Zersetzung des Fettes durch die im Abwasser vorhandenen Bakterien erreicht. Supplinkombinationen zur Förderung der fettabbauenden (bzw. -emulgierenden) Bakterien werden allein oder in Kombination mit einem Detergens auf den Pfropfen im Abwasserrohr gebracht. Die Supplinkombination ermöglicht ein rasches Wachstum der erwünschten Bakterien, was zu einer Auflösung des störenden Fettpfropfens führt. Bei den fettabbauenden bzw. emulgierenden Bakterien handelt es sich um ein breites Spektrum von Bakterien, die normalerweise im Abwasser selbst enthalten sind.

Um das Eindringen der Suppline in den Fettpfropf zu fördern und die mikrobielle Fettlösung zu unterstützen, kann ein Detergens zugesetzt werden. Dem gleichen Zweck dient allein oder in Kombination mit dem Detergens ein Zusatz eines $CO_2$-entwickelnden Pulvers, z. B. Brausepulver, das aus etwa 50 Gewichtsprozent Natriumhydrogencarbonat und etwa 50 Gewichtsprozent Weinsäure besteht.

Die Erfindung wird im folgenden anhand von Ausführungsbeispielen näher erläutert, ohne jedoch hierauf beschränkt zu sein.

Beispiel 1

Zerstörung des Pfropfens in Abflußrohren

Eine Supplinkombination aus
30 mg Phenylalanin
30 mg Arginin
30 mg Asparaginsäure
30 mg Oxalsäure
30 mg Äpfelsäure
30 mg Malonsäure
30 mg Propionsäure,
der als Detergens 3 g Natriumdodecylsulfat und als $CO_2$-entwickelndes Mittel ein Brausepulver aus 5 g Natriumhydrogencarbonat und 5 g Weinsäure zugesetzt wird, das aus insgesamt 13,21 g Gemisch entsprechend dem Volumen eines Eßlöffels besteht, wird mit 900 ml Wasser und 100 ml einer Erdesuspension (als Bakterienquelle) gemischt und im Becherglas zu einem zylindrischen Prüfling (Durchmesser 32 mm; Länge 29 mm; Gewicht 17 g) aus den folgenden Bestandteilen gegeben:
27 Gew.-% Wasser
3 Gew.-% Haare
10 Gew.-% Palmin (Cocosfett)
17 Gew.-% Schweinefett
20 Gew.-% Kaffeesatz
6 Gew.-% Teeblätter.

Bei 15 Grad Celsius erfolgt die Zugabe der Supplinkombination, die ein Detergens und Brausepulver enthält, zu dem zylindrischen Prüfling (Fettpfropfen) in einem Becherglas. Nach 30 bis 45 Minuten ist der Prüfling so stark angegriffen, daß er bei starkem Schütteln oder beim Spülen mit Wasser (Simulation des Spülstoßes in einer Abwasserleitung) zerfällt.

Vergleichsbeispiel 1

Gemäß Beispiel 1 wird ein künstlicher Fettpfropfen im Becherglas mit einer Mischung aus 3 g Natriumdodecylsulfat als Detergens und 5 g Natriumhydrogenacarbonat und 5 g Weinsäure (= 10 g Brausepulver) als $CO_2$-entwickelndes Pulver versetzt. Der Fettpfropfen wird ohne die Supplinkombination nur geringfügig angegriffen, so daß er selbst nach zweistündiger Einwirkung bei 15 Grad Celsius auch bei starkem Schütteln oder beim Spülen mit Wasser nicht zerfällt.

Vergleichsbeispiel 2

Wie in Beispiel 1 wird ein Fettpfropf im Becherglas behandelt, wobei jedoch keine Erdesuspension (als Bakterienquelle) zugesetzt wird. Die in Beispiel 2 verwendete Supplinkombination, der 3 g Natriumdodecylsulfat als Detergens und 10 g Brausepulver als $CO_2$-entwickelndes Mittel zugegeben werden, zeigt nur geringe Einwirkung auf den Fettpfropfen. Dieser kann daher selbst nach zweistündiger Einwirkung unter starkem Schütteln oder beim Spülen mit Wasser nicht zum Zerfall gebracht werden.

Beispiel 2

Eine Supplinkombination aus den folgenden Bestandteilen:
0,5 mg Tyrosin
0,5 mg Phenylalanin
0,5 mg Tryptophan
0,5 mg Glutaminsäure
0,5 mg Arginin
0,5 mg Prolin
0,5 mg Oxalsäure
0,5 mg Äpfelsäure
0,5 mg Bernsteinsäure
0,5 mg Malonsäure
0,5 mg Propionsäure
0,5 mg Fumarsäure
0,5 mg Ketoglutarsäure
0,5 mg Nicotinsäure
0,5 mg Glutarsäure
wird mit 900 ml Wasser gelöst und mit 100 ml Erdesuspension versetzt. Dieses Gemisch wird im Becherglas zu einem zylindrischen Prüfling, der die in Beispiel 1 genannte Zusammensetzung und Dimensionen besitzt, zugegeben. Obwohl kein Detergens und kein $CO_2$-entwickelndes Mittel zugesetzt wird, erfolgt nach ca. 90 Minuten bei starkem Schütteln des Gemisches ein Zerfall des Fettpfropfs.

Beispiel 3

Eine Mischung aus
15 mg Phenylalanin
15 mg Arginin
15 mg Asparaginsäure
15 mg Oxalsäure
15 mg Äpfelsäure
15 mg Malonsäure
15 mg Propionsäure
1 mg LACOBIOS
2 mg Phonolith Gesteinsmehl
1,5 mg Magnesiumsulfatheptahydrat
1 g Biosol[R]
sowie als Detergens
3 g Natriumdodecylsulfat

sowie als Brausepulver
5 g Natriumhydrogencarbonat
5 g Weinsäure
wird in 900 ml Wasser in einem Becherglas gelöst und mit 100 ml Erdesuspension (als Quelle für fettabbauende bzw. fettemulgierende Mikroorganismen) versetzt. Bei 15 Grad Celsius erfolgt die Zugabe zu dem Prüfling (Fettpfropf) wie in Beispiel 1 der nach 90 Minuten so stark angegriffen ist, daß er bei starkem Schütteln zerfällt.

## Patentansprüche

1. Verfahren zur Reinigung von Abflußrohren für fetthaltige Abwässer aus dem Haushalt oder gewerblichen Unternehmen, dadurch gekennzeichnet, daß man den im Abwasser enthaltenen fettabbauenden und/oder fettemulgierenden Bakterien Suppline zusetzt.

2. Verfahren nach Anspruch 1, dadurch gekennzeichnet, daß man als Suppline eine oder mehrere Aminosäuren und eine oder mehrere Karbonsäuren zusetzt.

3. Verfahren nach Anspruch 2, dadurch gekennzeichnet, daß man als Suppline ein Gemisch aus Phenylalanin, Arginin, Asparaginsäure, Oxalsäure, Äpfelsäure, Malonsäure und Propionsäure zusetzt.

4. Verfahren nach einem der Ansprüche 1 bis 3, dadurch gekennzeichnet, daß man zusätzlich ein Detergens und/oder ein $CO_2$-entwickelndes Mittel zusetzt.

## Claims

1. A method of cleaning drainpipes for fatty waste water from households or commercial undertakings, characterised in that supplins are added to the fat-decomposing and/or fat-emulsifying bacteria in the waste water.

2. A method according to claim 1, characterised in that the supplins added are one or more amino acids and one or more carboxylic acids.

3. A method according to claim 2, characterised in that the supplins added are a mixture of phenylalanine, arginine, aspartic acid, oxalic acid, malic acid, malonic acid and propionic acid.

4. A method according to any of claims 1 to 3, characterised in that a detergent and/or a $CO_2$-evolving agent are also added.

## Revendications

1. Procédé de nettoyage de conduits d'évacuation des eaux usées contenant de la graisse, en provenance des ménages ou de l'industrie, caractérisé par l'adjonction de facteurs de croissance aux bactéries présentes dans les eaux usées, dissolvant et/ou émulsifiant la graisse.

2. Procéde selon la revendication 1 caractérisé par l'adjonction en tant que facteur de croissance d'un ou plusieurs aminoacides et d'un ou plusieurs acides carboxiliques.

3. Procédé selon la revendication 2 caractérisé par l'adjonction en tant que facteur de croissance d'un mélange composé de phénylalanine, d'arginine, d'acide aspartique, d'acide oxalique, d'acide malique, d'acide malonique et d'acide propionique.

4. Procédé selon l'une des revendications 1 à 3 caractérisé par l'adjonction complémentaire d'un détergent et/ou d'un moyen dégageant du $CO_2$.